# EUROPEAN PATENT APPLICATION

(11) **EP 4 477 297 A1**
(43) Date of publication of application: **18.12.2024**
(21) Application number: 23752738.7
(22) Date of filing: 31.01.2023
(51) Int. Cl.: B01D 61/00, C08F 220/42, C08F 220/56, C02F 1/44

(54) **DRAW SOLUTION, WATER TREATMENT METHOD, AND WATER TREATMENT APPARATUS**

(30) Priority: 09.02.2022 JP 2022018724
(71) Applicant: JNC Corporation, Chiyoda-ku Tokyo 100-8105 (JP); Nihon University, Tokyo 102-8275 (JP)
(72) Inventor: NAGASAKO, Tadashi, Ichihara-shi, Chiba 290-8551 (JP); NAGAOKA, Hirokazu, Ichihara-shi, Chiba 290-8551 (JP); TAKAHASHI, Tomoki, Tokyo 102-8275 (JP)
(74) Representative: Becker, Eberhard
(86) International application number: PCT/JP2023/003050
(87) International publication number: WO 2023/153273

(57) **Abstract**

For the purpose of providing a draw solution containing an UCST-type polymeric compound useful as a draw solute in a forward osmosis membrane separation method for performing the membrane separation of water using a forward osmosis membrane, a water treatment method and a water treatment apparatus, the draw solution contains a polymeric compound produced using, as starting materials, a compound represented by general formula (a) and a compound represented by general formula (b) as a draw solute. 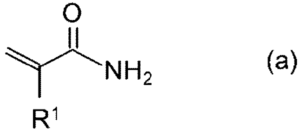 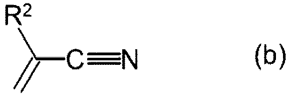 [In formula (a) and formula (b), R¹ and R² each independently represent a hydrogen atom or a methyl group.]

## Description

### Technical Field

The present invention relates to a draw solution, a water treatment method, and a water treatment apparatus used in membrane separation of water using a forward osmosis membrane.

### Related Art

A forward osmosis (hereinafter referred to as FO) membrane method is a membrane separation method utilizing the phenomenon in which water on a low osmotic pressure side moves toward a solution having a high osmotic pressure. Compared to a reverse osmosis (hereinafter appropriately referred to as RO) membrane method, the FO membrane method is known as a process having low environmental impact in terms of reduced energy consumption in membrane separation.

In the FO membrane method, the use of a draw solution (hereinafter appropriately referred to as DS) containing a draw solute is essential, and systems using various draw solutes have been disclosed. Among them, methods using a temperature-responsive polymer have recently been attracting attention.

For example, Patent Document 1 discloses a draw solute and a DS using a temperature-responsive polymer that is composed of a copolymeric compound of a cyclic imide and a nitrogen-containing vinyl monomer, as well as an FO treatment apparatus and an FO treatment method using the same.

Patent Document 2 describes, as a temperature-responsive polymer containing no nitrogen atoms, a draw solute selected from a polyvinyl ether-based polymer, a polyvinyl acetate-based polymer, and a (meth)acrylic acid-based polymer. Furthermore, Patent Document 3 discloses a draw solute and a DS of a temperature-responsive polymer using a polyglycerin derivative.

All these temperature-responsive polymers are of a type exhibiting a lower critical solution temperature (hereinafter appropriately referred to as LCST). A polymer of this type that is dissolved in low-temperature water precipitates and undergoes phase separation from the water when a temperature equal to or higher than the LCST is reached. There are many known materials for the LCST-type temperature-responsive polymers, and it is relatively easy to design the LCST according to the application. However, in the case of treating high-temperature contaminated water without cooling, as in, for example, an oil field or shale gas produced water treatment, the LCST needs to be designed to be considerably high. Accordingly, there is a problem that temperature raising and lowering equipment is required.

Accordingly, to cope with use under high temperature conditions, DS of an upper critical solution temperature (hereinafter appropriately referred to as UCST) type is preferable in which a temperature-responsive polymer dissolved in high-temperature water undergoes phase separation from the water when the temperature drops to a specific temperature or lower. However, since there are only a few types of temperature-responsive polymers exhibiting the UCST, there are very few conventional technologies for DS using the same.

Patent Document 4 describes that acrylamide and a copolymer thereof can be used as temperature-responsive polymers exhibiting the UCST for DS. However, no specific composition or the like of the copolymer is disclosed. Also, in this document, a form of an osmotic pressure inducer is used in which some kind of support is chemically modified with these temperature-responsive polymers. Hence, it is unclear whether a polymer exhibiting the UCST alone is able to function as a draw solute without using a support.

### Prior-Art Documents

### Patent Documents

Patent Document 1: Japanese Patent Laid-open No. 2012-170954
Patent Document 2: Japanese Patent Laid-open No. 2015-47541
Patent Document 3: Japanese Patent Laid-open No. 2019-182812
Patent Document 4: Japanese Patent Laid-open No. 2015-160164

### SUMMARY OF THE INVENTION

### Problems to Be Solved by the Invention

The present invention aims to provide a draw solution containing a UCST-type polymeric compound useful as a draw solute in an FO membrane method for performing membrane separation of water using an FO membrane, a water treatment method, and a water treatment apparatus.

### Means for Solving the Problems

As a result of earnest studies by the present inventors, the present invention has been completed. That is, the present invention includes the following technical means.
[1] A draw solution is used in membrane separation of water using a forward osmosis membrane. The draw solution is characterized by containing, as a draw solute, a polymeric compound produced using, as a starting material, a compound represented by general formula (a) and a compound represented by general formula (b): 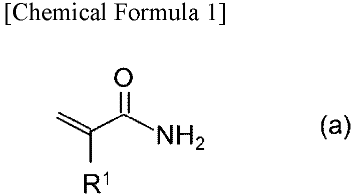 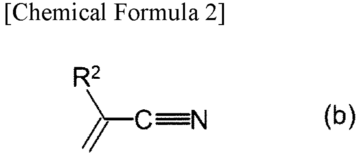 [In formula (a) and formula (b), R¹ and R² each independently represent a hydrogen atom or a methyl group.]
[2] In the draw solution described in [1], the compound represented by general formula (a) ranges from 50 to 70 mol%, and the compound represented by general formula (b) ranges from 30 to 50 mol%.
[3] In the draw solution described in [1] or [2], the polymeric compound has a weight average molecular weight Mw ranging from 2000 to 7000.
[4] In the draw solution described in [1] or [2], the polymeric compound has a weight average molecular weight Mw ranging from 2500 to 3500.
[5] In the draw solution described in [3] or [4], the polymeric compound has a polydispersity (Mw/Mn) of 1.55 or less.
[6] In the draw solution described in [3] or [4], the polymeric compound has a polydispersity (Mw/Mn) of 1.50 or less.
[7] In the draw solution described in any one of [1] to [6], a 20% by weight aqueous solution of the polymeric compound has an upper critical solution temperature ranging from 20 to 70 °C.
[8] In the draw solution described in any one of [1] to [6], a 20% by weight aqueous solution of the polymeric compound has an upper critical solution temperature ranging from 30 to 60 °C.
[9] A water treatment method is for performing membrane separation of water using a forward osmosis membrane and producing fresh water. The water treatment method is characterized by including: an osmosis process, in which a feed solution is brought into contact with the draw solution described in any one of [1] to [8] via a forward osmosis membrane, and water contained in the feed solution is moved to the draw solution side to obtain a dilute draw solution; and a separation process, in which the dilute draw solution is cooled to an upper critical solution temperature or lower, and is separated into a dilute phase in which a concentration of the polymeric compound is lower than that in the dilute draw solution and a dense phase in which the concentration of the polymeric compound is higher than that in the dilute draw solution.
[10] A water treatment apparatus is for performing membrane separation of water using a forward osmosis membrane. The water treatment apparatus is characterized by including: a forward osmosis section, in which a feed solution is brought into contact with the draw solution described in any one of [1] to [8] via a forward osmosis membrane, and water contained in the feed solution is moved to the draw solution side to obtain a dilute draw solution; a separation section, in which the dilute draw solution is cooled to an upper critical solution temperature or lower, and is separated into a dilute phase in which a concentration of the polymeric compound is lower than that in the dilute draw solution and a dense phase in which the concentration of the polymeric compound is higher than that in the dilute draw solution; a collection section, in which water is extracted from the dilute phase to obtain a collected dilute phase after extraction of water; and a circulation section, in which the dense phase in the separation section and the collected dilute phase after extraction of water in the collection section are heated, and are circulated to the forward osmosis section.

### Effects of the Invention

The draw solution of the present invention contains, as a solute, a UCST-type polymeric compound which alone has excellent temperature responsiveness, precipitation/redissolution speed, and chemical stability in a high temperature region. Hence, it is possible to stably perform water treatment by an FO membrane method in a high temperature region.

### BRIEF DESCRIPTION OF THE DRAWINGS

FIG. 1A is a schematic diagram describing an RO membrane method.
FIG. 1B is a schematic diagram describing an FO membrane method.
FIG. 2 is a schematic diagram describing a water treatment apparatus and a water treatment method according to an embodiment.
FIG. 3 is a phase diagram of DS of examples.
FIG. 4 is a graph showing a relationship between concentration and osmotic pressure of DS of examples.
FIG. 5 is a schematic diagram describing a permeability test method for DS of examples.
FIG. 6 is a graph showing a result of a permeability test when a polymer of Example 2 was used as DS and pure water was used as FS.
FIG. 7 is a graph showing a result of a permeability test when a polymer of Example 3 was used as DS and pure water was used as FS.
FIG. 8 is a graph showing a result of a permeability test when a polymer of Example 4 was used as DS and pure water was used as FS.
FIG. 9 is a graph showing a result of a permeability test when a polymer of Example 6 was used as DS and pure water was used as FS.
FIG. 10 is a graph showing a result of a permeability test when a polymer of Example 7 was used as DS and pure water was used as FS.
FIG. 11 is a graph showing a result of a water permeability test when the polymer of Example 2 was used as DS and 0.15 mol/L of NaCl aqueous solution was used as FS.
FIG. 12 is a graph showing a result of a water permeability test when the polymer of Example 3 was used as DS and 0.15 mol/L of NaCl aqueous solution was used as FS.
FIG. 13 is a graph showing a result of a water permeability test when the polymer of Example 4 was used as DS and 0.15 mol/L of NaCl aqueous solution was used as FS.

### DESCRIPTION OF THE EMBODIMENTS

Embodiments of the present invention will be described below with reference to the drawings as appropriate.

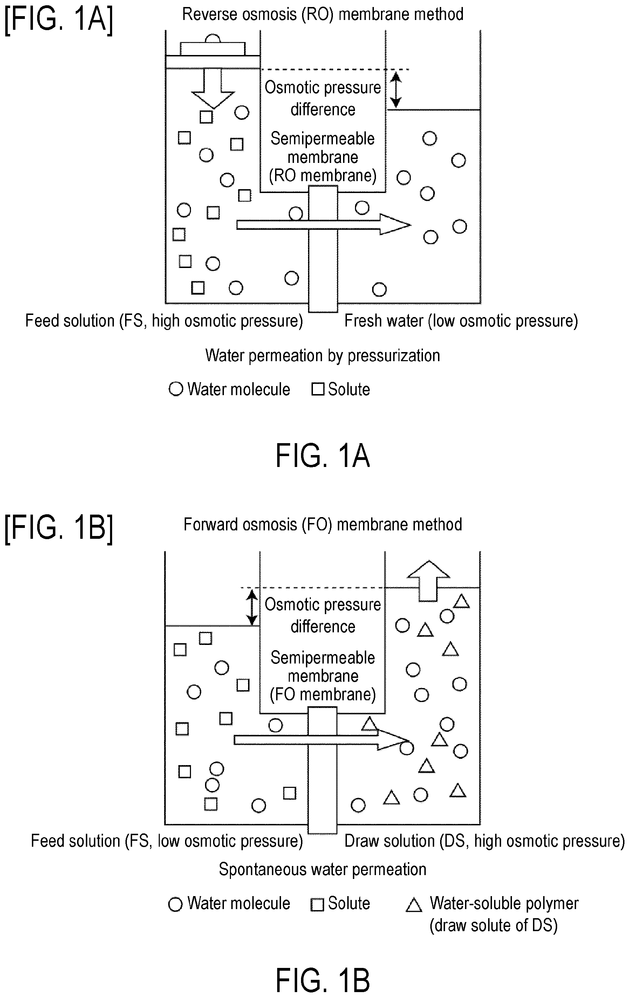

FIG. 1A is a schematic diagram describing an RO membrane method. As shown in the figure, in the RO membrane method, fresh water and a feed solution (hereinafter appropriately referred to as FS) are brought into contact with each other via an RO membrane. A pressure greater than a difference in osmotic pressure between the fresh water and the FS is applied to the FS side, and the water on the FS side is passed through the RO membrane to be moved to the fresh water side. In the RO membrane method, a large amount of energy is required to apply pressure to the FS side.

FIG. 1B is a schematic diagram describing an FO membrane method. As shown in the figure, in the FO membrane method, a DS and an FS are brought into contact with each other via an FO membrane. Since the DS is a liquid having a higher osmotic pressure than the FS, the water in the FS that has a lower osmotic pressure than the DS spontaneously passes through the FO membrane and moves to the DS side. The water movement occurs until a difference in liquid level between the FS and the DS corresponds to a difference in osmotic pressure.

In this way, in the FO membrane method, by utilizing the fact that water spontaneously passes through the FO membrane, less energy is required for water separation than that in the RO membrane method. Hence, the FO membrane method is superior to the RO membrane method in, for example, the fact that fresh water can be produced from seawater with less energy.

### <Water Treatment Apparatus and Water Treatment Method>

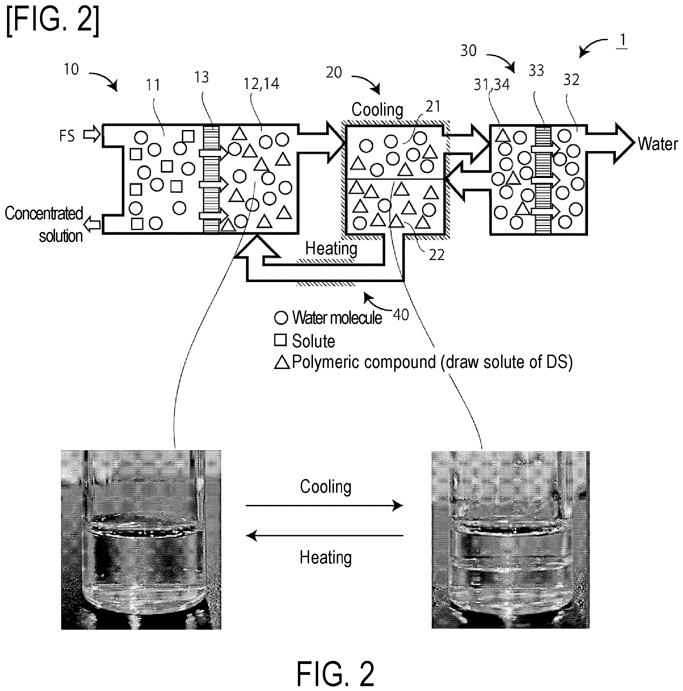

FIG. 2 is a schematic diagram describing a water treatment apparatus 1 and a water treatment method of the present invention.

The water treatment apparatus 1 is an apparatus utilizing an FO membrane method in which water is subjected to membrane separation using an FO membrane. The water treatment apparatus 1 includes an FO section 10, a separation section 20, a collection section 30, and a circulation section 40.

In the FO section 10, an FO membrane 13 is provided between an FS tank 11 to which an FS is supplied and a DS tank 12 to which a DS is supplied. In the FO section 10, the FS being an aqueous solution to be treated is brought into contact with the DS of the present invention, and the water contained in the FS is moved to the DS tank on the DS side to obtain a dilute DS 14. The dilute DS in the DS tank 12 is in a homogeneous state (see the photograph at the lower left of FIG. 2).

From the viewpoint of improving the efficiency of passing the water in the FS through the FO membrane 13, the temperature of the FO section 10 is preferably in the range of 30 to 90 °C, and more preferably in the range of 40 to 80 °C.

From the same viewpoint, the concentration of a polymeric compound in an aqueous solution of the DS in the DS tank 12 is preferably in the range of 30% to 90% by weight, and more preferably in the range of 40% to 70% by weight. The concentration of a polymeric compound in an aqueous solution of the dilute DS (which is diluted with the water that has passed through the FO membrane 13) is preferably in the range of 10% to 80% by weight, and more preferably in the range of 20% to 60% by weight.

A concentrated solution containing a highly concentrated solute, which is generated by removing a portion of the water (water molecules) in the FS, is discharged from the FS tank 11 as appropriate. In the FO section 10, the solute in the FS in the FS tank 11 is concentrated to obtain the concentrated solution, and the water is separated from the FS and moved to the DS in the DS tank 12 to obtain the dilute DS. The solutes in FIG. 1A, FIG. 1B and FIG. 2 indicate those other than the polymeric compound that is a draw solute of the DS.

In the separation section 20, the dilute DS in the DS tank 12 is cooled, and the polymeric compound undergoes phase transition due to a temperature change, thereby separating the dilute DS into a dilute phase 21 and a dense phase 22. By cooling in the separation section 20, the dilute DS is separated into two phases (see the photograph at the lower right of FIG. 2).

The dilute phase 21 is a phase in which the concentration of the polymeric compound is lower than that in the dilute DS and a larger amount of water is contained than in the dilute DS. The dense phase 22 is a phase in which the concentration of the polymeric compound in the DS is higher than that in the dilute DS and a larger amount of the draw solute of the DS is contained than in the dilute DS. The dense phase 22 is reused as the DS in the FO section 10.

As descried above, in the separation section 20, the water is extracted from the dilute DS and the DS is regenerated. From the viewpoint of efficiently separating the dilute phase 21 and the dense phase 22, the temperature of the separation section 20 is preferably 10 to 60 °C, and more preferably 20 to 50 °C.

In the collection section 30, a nanofiltration (NF) membrane 33 is provided between a supply tank 31 to which the dilute phase 21 is supplied and a collection tank 32 from which filtered water is extracted. By the nanofiltration membrane 33, water is extracted from the dilute phase 21 supplied to the supply tank 31, and the water is collected in the collection tank 32. A collected dilute phase 34 in which the polymeric compound contained in the dilute phase 21 is concentrated is returned to the separation section 20. In this way, in the separation section 20, the collected dilute phase 34 is separated into the dilute phase 21 and the dense phase 22. By reusing the collected dilute phase 34, consumption of the polymeric compound can be reduced.

From the viewpoint of improving the efficiency of water collection, the temperature of the collection section 30 is preferably in the range of 10 to 60 °C, and more preferably in the range of 20 to 50 °C.

The circulation section 40 communicates between the inside of the DS tank 12 of the FO section 10 and each of the separation section 20 and the supply tank 31 of the collection section 30. The dense phase 22 in the separation section 20 and the collected dilute phase 34 in the collection section 30 are heated by the circulation section 40 to obtain a homogeneous phase, which is circulated to the FO section 10 and reused as DS.

A temperature to which the dense phase 22 and the collected dilute phase 34 are heated by the circulation section 40 may be any temperature at which the homogeneous phase is obtained in the dense phase 22 and the collected dilute phase 34. For example, the dense phase 22 and the collected dilute phase 34 are heated so that the DS to be reused has a temperature of about 30 to 80 °C.

By using the water treatment apparatus 1 in which water is subjected to membrane separation using the FO membrane, a water treatment method can be carried out including: an osmosis process, in which FS and DS are brought into contact with each other via the FO membrane, and water contained in the FS is moved to the DS side to obtain a dilute DS; and a separation process, in which the dilute DS is cooled to an upper critical solution temperature or lower, and is separated into the dilute phase in which the concentration of the polymeric compound is lower than that in the dilute DS and the dense phase in which the concentration of the polymeric compound is higher than that in the dilute DS.

The upper critical solution temperature is a cloud point at which a maximum value in a total concentration range is shown. The cloud point refers to, in the case where a transmittance of a polymer solution for visible light at a wavelength of 550 nm when the polymer solution is heated and dissolved and a completely homogeneous phase is obtained is taken as 100%, a temperature at which a transmittance of 50% is shown when measurement is performed during cooling of the polymer solution at a rate of 1 °C/min. The transmittance is measured using an ultraviolet-visible (UV-VIS) spectrophotometer (V-660, manufactured by JASCO Corporation).

In the water treatment apparatus 1, by utilizing spontaneous water permeation by the difference in osmotic pressure between DS and FS (treated water, produced water), only water is extracted from the treated water. In the separation section 20, the dilute DS in the DS tank 12 has the polymeric compound subjected to a phase transition by a temperature change, the DS and the water extracted from the dilute DS are separated, and the separated water is collected in the collection section 30. The DS is reused as regenerated DS in the FO section 10 via the circulation section 40.

An FO membrane separation system using temperature-responsive DS, in which water is subjected to membrane separation using an FO membrane, has attracted attention as a technology capable of treating water at low cost.

### <Draw Solution (DS)>

The DS of the present invention used in the water treatment apparatus and the water treatment apparatus of the present invention may be used in membrane separation of water using an FO membrane, and contains, as a draw solute, a polymeric compound produced using, as a starting material, a compound represented by general formula (a) and a compound represented by general formula (b) below: 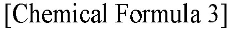 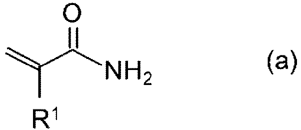 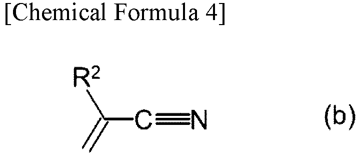 [In formula (a) and formula (b), R¹ and R² each independently represent a hydrogen atom or a methyl group.]

The polymeric compound of the present invention is a copolymer having, as a starting material, a compound represented by general formula (a) and a compound represented by general formula (b). In the case where this copolymer is made into an aqueous solution, UCST-type thermoresponsiveness is exhibited in which a homogeneous phase is formed at high temperatures, and the aqueous solution is separated into two phases at low temperatures.

The polymeric compound of the present invention may be a copolymer having, as a starting material, three or more compounds including a plurality of compounds as both or either of a compound represented by general formula (a) and a compound represented by general formula (b). Specific examples include: a combination of acrylamide, methacrylamide, and acrylonitrile; a combination of acrylamide, methacrylamide, and methacrylonitrile; a combination of acrylamide, acrylonitrile, and methacrylonitrile; and a combination of methacrylamide, acrylonitrile, and methacrylonitrile.

In the polymeric compound, a ratio of repeating units derived from the compound represented by general formula (a) to repeating units derived from the compound represented by general formula (b) is determined according to a ratio of the compound represented by general formula (a) to the compound represented by general formula (b) in the starting material of the polymeric compound.

From the viewpoint of obtaining a DS having a high osmotic pressure and a high water permeability, when the total amount of the compound represented by general formula (a) and the compound represented by general formula (b) contained in the starting material is taken as 100 mol%, it is more preferable that the compound represented by general formula (a) is in the range of 50 to 70 mol% and the compound represented by general formula (b) is in the range of 30 to 50 mol%, and it is even more preferable that the compound represented by general formula (a) is in the range of 55 to 70 mol% and the compound represented by general formula (b) is in the range of 30 to 45 mol%. In the present specification, a range of A to B means A or more and B or less.

From the same viewpoint, the polymeric compound of the present invention has a weight average molecular weight Mw of preferably in the range of 1000 to 10000, and more preferably in the range of 2000 to 7000. An upper limit of polydispersity (Mw/Mn) of the polymeric compound is preferably 1.60 or less, and more preferably 1.55 or less. A lower limit of the polydispersity (Mw/Mn) of the polymeric compound is preferably 1.40 or more, and more preferably 1.45 or more.

In an FO process, generally, the lower the molecular weight of the solute of the DS, the higher the osmotic pressure. If Mw is less than 1000, back diffusion to the FS side occurs; if Mw exceeds 10000, viscosity of the aqueous solution may significantly increase. In the DS of the present invention, two or more polymeric compounds having different molecular weights may be used in combination.

A polymerization method for obtaining a polymeric compound as a draw solvent of the DS of the present invention may be any conventionally known method, and examples thereof include a method using a radical polymerization catalyst, and a method of irradiating with radiation, an electron beam, an ultraviolet ray or the like. Generally, a method using a radical polymerization catalyst is preferable.

For example, by dropping a monomer solution and an initiator solution at the same time for polymerization, an acrylonitrile/acrylamide copolymer, which is the polymeric compound of the present invention, can be produced.

As a radical polymerization initiator, the following may be used: a peroxide, such as hydrogen peroxide, benzoyl peroxide, and cumene hydroxyperoxide; an azo compound, such as 2,2'-azobis(2-amidinopropane) dihydrochloride and 2,2'-azobis[2-(2-imidazolin-2-yl)propane] dihydrochloride; a radical generator of a persulfate such as ammonium persulfate and potassium persulfate; and a combination of the foregoing and a reducing agent such as sodium hydrogen sulfite, L-ascorbic acid, or triethylamine. Among them, 2,2'-azobis[2-(2-imidazolin-2-yl)propane] dihydrochloride is most preferable.

As a polymerization solvent, for example, water, methanol, ethanol, acetone, dimethylformamide, dimethylsulfoxide, or a mixture thereof, can be used. A polymerization temperature varies depending on the type of the catalyst used, and is, for example, in the range of 20 to 100 °C. There is no limitation on the concentration of a monomer composition in a polymerization system. However, in consideration of ease of control of polymerization reaction, yield, and economic efficiency, the concentration is preferably in the range of 5% to 80% by weight.

The molecular weight of the polymeric compound of the present invention can be controlled by the amount of a chain transfer agent used. Accordingly, in order to obtain a polymeric compound having the above preferable molecular weight, a chain transfer agent may be used as necessary. Examples of the chain transfer agent include alkanethiol, mercaptoacetic acid and an ester thereof, mercaptopropionic acid and an ester thereof, 2-mercaptoethanol, thiophenol, and 2,4-diphenyl-4-methyl-1-pentene. Among them, preferable examples include mercaptoacetic acid and an ester thereof as well as mercaptopropionic acid and an ester thereof are preferable, and more preferable examples include 3-mercaptopropionic acid. Instead of the chain transfer agent, a reversible addition-fragmentation chain transfer (RAFT) agent, such as 4-cyano-4-[(dodecylsulfanylthiocarbonyl)sulfanyl]pentanoic acid, 2-cyano-2-[(dodecylsulfanylthiocarbonyl)sulfanyl]propane, S,S-dibenzyltrithiocarbonic acid, methyl 4-cyano-4-[(dodecylsulfanylthiocarbonyl)sulfanyl]pentanoate, 2'-cyanobutan-2'-yl 4-chloro-3,5-dimethylpyrazole-1-carbodithioate, 2'-cyanobutan-2'-yl 3,5-dimethylpyrazole-1-carbodithioate, or cyanomethyl 3,5-dimethylpyrazole-1-carbodithioate, may be used.

A preferable cloud-point temperature of the polymeric compound used as the draw solute of the DS of the present embodiment varies depending on the concentration in the DS or an operating temperature of the FO process. When the polymeric compound is made into a 50% by weight aqueous solution, the cloud-point temperature is preferably in the range of 10 to 50 °C. If the cloud-point temperature is less than 10 °C, an excessive amount of cooling energy is required for separation; if the cloud-point temperature exceeds 50 °C, there is a possibility that aggregation may occur in an FO section. The cloud-point temperature is more preferably in the range of 20 to 40 °C.

A preferable cloud-point temperature of the DS of the present invention varies depending on the concentration or the operating temperature of the FO process, and is preferably in the range of 10 to 50 °C. If the cloud-point temperature is less than 10 °C, an excessive amount of cooling energy is required for separation; if the cloud-point temperature exceeds 50 °C, there is a possibility that aggregation may occur in an FO section. The cloud-point temperature is more preferably in the range of 20 to 40 °C.

### Examples

The present invention will be described in more detail below with reference to examples. However, the present invention is not limited to the examples specifically disclosed below.

By a double dropping polymerization method in which a monomer solution and an initiator solution are dropped at the same time, polymeric compounds having repeating units derived from acrylamide (hereinafter referred to as AAm), acrylonitrile (hereinafter referred to as AN) or methacrylamide (hereinafter referred to as MAAm) in the ratios shown in the table below were prepared. The ratios of repeating units in the polymeric compounds were determined according to the ratios of AAm, AN or MAAm contained in a starting material. Accordingly, Table 1 shows mol% of AAm, AN, or MAAm in the case where a total number of moles of AAm, AN, and MAAm in the starting material is taken as 100 mol%. In the following, the ratios of repeating units in the polymeric compounds will be shown in terms of mol% of AAm, AN or MAAm in the starting material.

**[Table 1]**

| Table 1 | Example 1 | Example 2 | Example 3 | Example 4 | Example 5 | Example 6 | Example 7 |
|---|---|---|---|---|---|---|---|
| AAm (mol%) | 70 | 65 | 60 | 55 | 50 | 60 | 0 |
| AN (mol%) | 30 | 35 | 40 | 45 | 50 | 40 | 40 |
| MAAm (mol%) | 0 | 0 | 0 | 0 | 0 | 0 | 0 |
| Weight average molecular weight (Mw) | 2838 | 2763 | 2780 | 2991 | 2891 | 6344 | 2892 |
| Number average molecular weight (Mn) | 1944 | 1916 | 1926 | 2032 | 1939 | 4094 | 1966 |
| Polydispersity (Mw/Mn) | 1.46 | 1.44 | 1.44 | 1.48 | 1.49 | 1.55 | 1.47 |

### <Cloud-point Temperature>

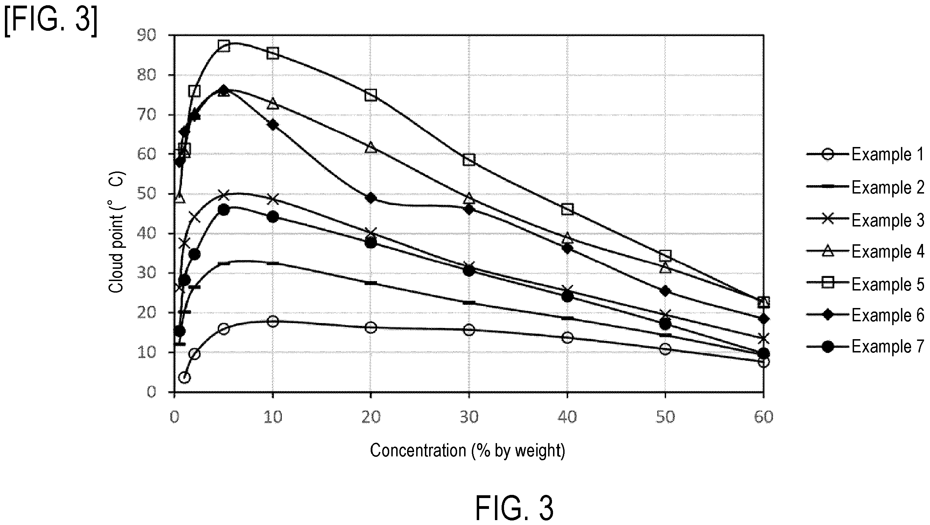

FIG. 3 is a phase diagram showing a relationship between aqueous solution concentration and cloud-point temperature of DS of Examples 1 to 7 containing each polymeric compound shown in Table 1. Each DS was in a homogeneous state (homogeneous phase) in a region above the cloud-point temperature in the phase diagram, and was in a phase-separated state in a region at or below the cloud-point temperature.

As shown in the figure, in all the DS, the cloud-point temperature of an aqueous solution containing a polymeric compound at a concentration of 30% by weight was 60 °C or lower. From this, it was found that each DS of the present embodiment was useful as DS for separating water using an FO membrane method at about 60 °C.

It was found that, in order to achieve a high osmotic pressure at about 20 to 50 °C, which is more preferable from the viewpoint of water collection efficiency, a polymeric compound containing about 55 to 70 mol% of repeating units derived from AAm or MAAm and about 35 to 50 mol% of repeating units derived from AN was more preferable.

The cloud-point temperatures of the DS of Examples 1 to 7 are shown in the tables below.

**[Table 2]**

| Table 2 | Cloud-point temperature (°C) | | |
|---|---|---|---|
| Concentration (% by weight) | Example 1 | Example 2 | Example 3 |
| 0.5 | <0 | 12.05 | 26.25 |
| 1 | 3.64 | 20.15 | 37.63 |
| 2 | 9.58 | 26.39 | 44.20 |
| 5 | 15.90 | 32.40 | 49.68 |
| 10 | 17.78 | 32.47 | 48.66 |
| 20 | 16.26 | 27.46 | 40.17 |
| 30 | 15.65 | 22.51 | 31.53 |
| 40 | 13.69 | 18.59 | 25.52 |
| 50 | 10.83 | 14.33 | 19.46 |
| 60 | 7.63 | 9.36 | 13.49 |

**[Table 3]**

| Table 3 | Cloud-point temperature (°C) | | | |
|---|---|---|---|---|
| Concentration (% by weight) | Example 4 | Example 5 | Example 6 | Example 7 |
| 0.5 | 49.22 | 59.77 | 58.07 | 15.36 |
| 1 | 60.54 | 61.30 | 65.70 | 28.24 |
| 2 | 70.28 | 75.99 | 69.77 | 34.77 |
| 5 | 76.10 | 87.28 | 76.18 | 46.02 |
| 10 | 72.93 | 85.47 | 67.47 | 44.25 |
| 20 | 61.77 | 75.00 | 48.99 | 37.73 |
| 30 | 49.03 | 58.54 | 46.15 | 30.62 |
| 40 | 38.97 | 46.13 | 36.31 | 24.09 |
| 50 | 31.43 | 34.43 | 25.48 | 17.17 |
| 60 | 22.89 | 22.55 | 18.46 | 9.72 |

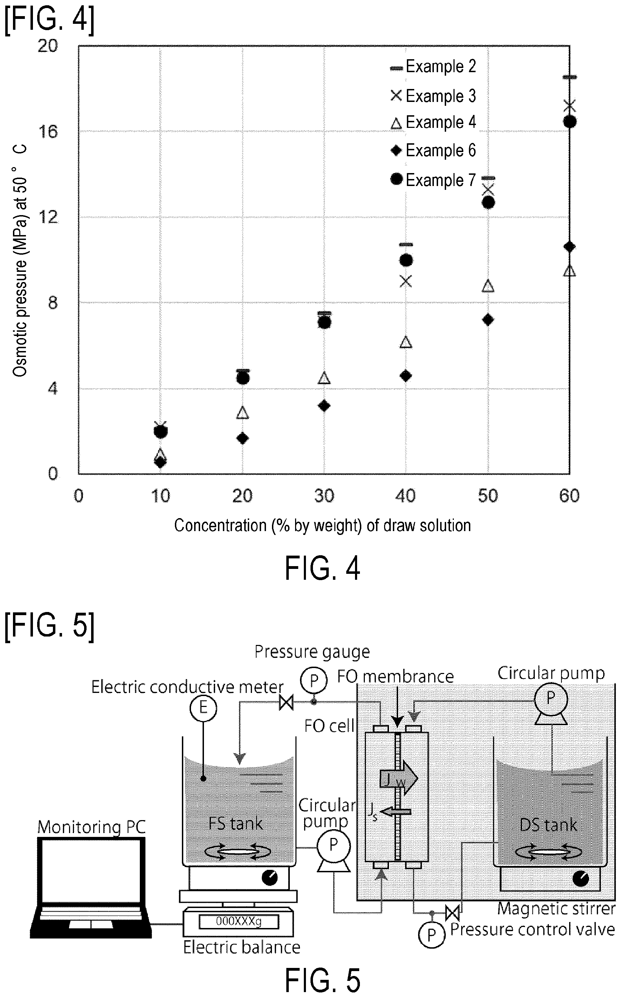

FIG. 4 is a graph showing the concentration of a water-soluble polymeric compound in DS and the osmotic pressure at 50 °C. The DS of Examples 2 to 4, 6 and 7 all exhibited a high osmotic pressure over a wide concentration range. From the results of Examples 2 to 4, it was found that an acrylonitrile/acrylamide copolymer varies in the osmotic pressure of DS depending on a ratio of repeating units derived from AAm to repeating units derived from AN.

From the viewpoint of achieving a high osmotic pressure, a polymeric compound containing about 50 to 70 mol% of repeating units derived from AAm and about 30 to 50 mol% of repeating units derived from AN is preferable.

From the results of Examples 3 and 6, it was found that the osmotic pressure of DS varies depending on the polydispersity Mw/Mn, a polymeric compound having polydispersity Mw/Mn of 1.50 or less is more preferable, and a polymeric compound having Mw of 4000 or less and Mn of 3000 or less is more preferable.

From the results of Examples 3 and 7, it can be said that a water-soluble polymer having repeating units derived from MAAm instead of AAm functions in the same manner as a water-soluble polymer having repeating units derived from AAm and AN.

### <Water Permeability>

FIG. 5 is a schematic diagram of an apparatus used in measurement of water permeability of DS.

As an FO membrane, an FO cell was prepared using a CTA membrane manufactured by FTS H2O. The FO membrane had effective area of 3.85×10⁻³ m².

As DS on a DS tank side, 50% aqueous solutions of the polymeric compounds of Examples 2 to 4, 6 and 7 were used.

As FS on an FS tank side, Milli-Q water and 0.15 mol/L of NaCl aqueous solution were used.

The DS and the FO cell were kept at 50 °C in a thermostatic bath, and the DS was circulated between the DS tank and the FO cell using a circulation pump. At that time, based on a measurement result of a pressure gauge, the DS was maintained at a constant pressure using a pressure control valve. Similarly, the FS was circulated between the FS tank and the FO cell while being maintained at a constant pressure.

A weight of the FS tank was measured using an electric balance while the conductivity of the FS tank was measured using an electric conductive meter, and a measurement result was stored in a monitoring PC. From the measurement result of the weight of the FS tank, the amount (water permeation amount) of water that has permeated the FO membrane was calculated.

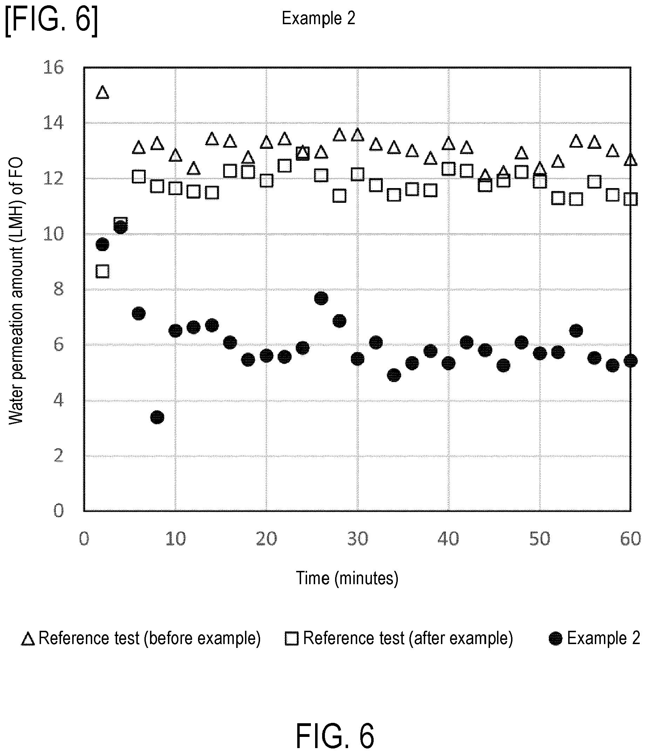

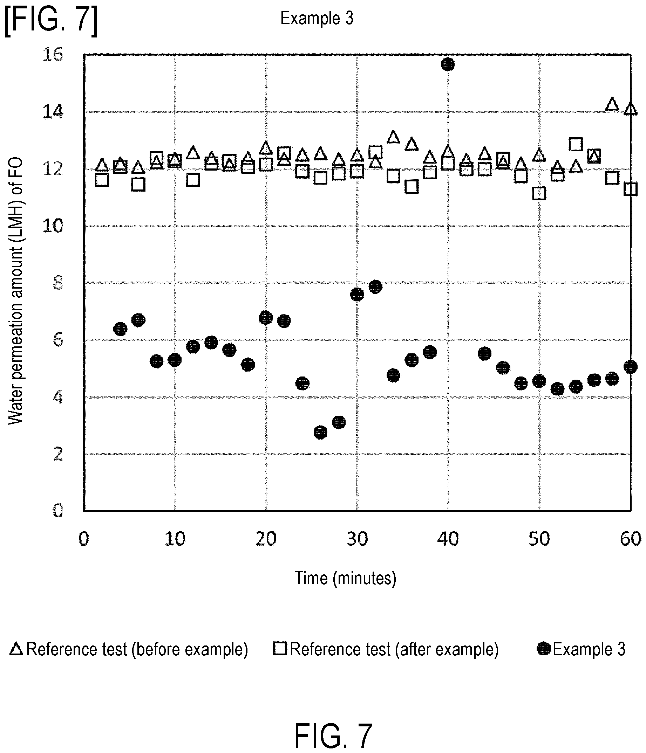

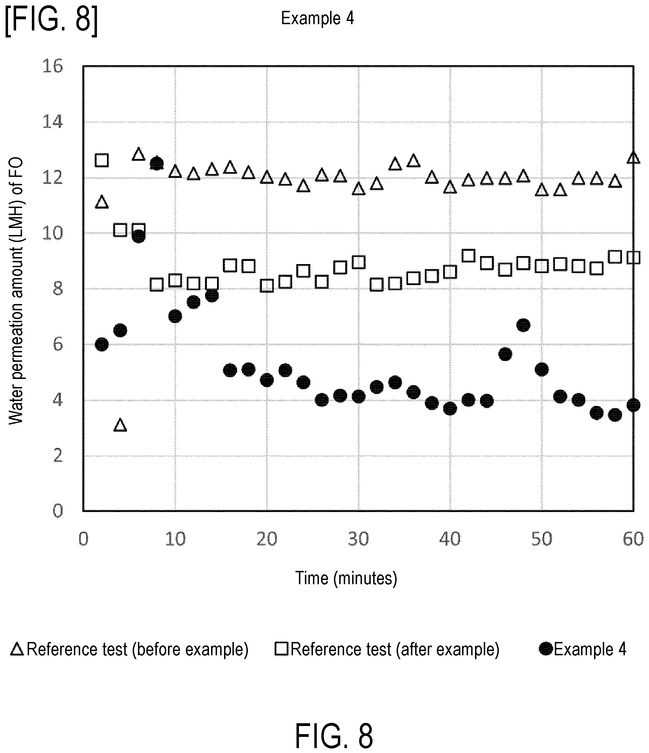

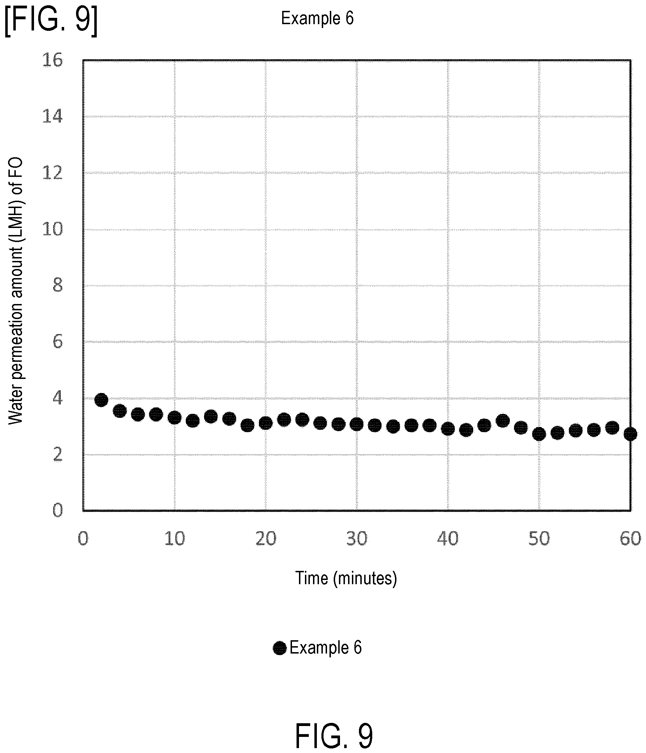

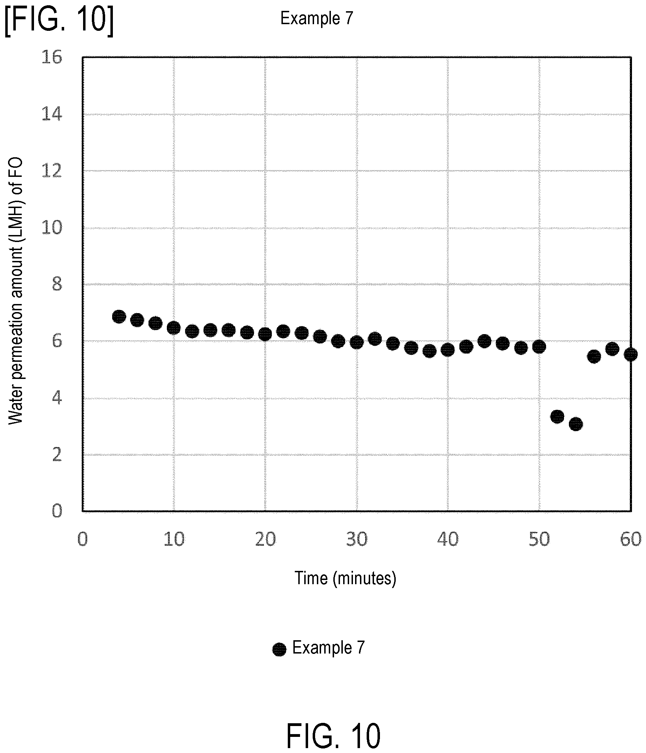

FIG. 6 to FIG. 10 are graphs showing results of a water permeability test when the polymers of Examples 2 to 4, 6 and 7 were used as DS and pure water was used as FS. Before and after the water permeability test of each example, a water permeability test (reference test) was carried out using 0.6 M of NaCl aqueous solution as DS and pure water as FS, and clogging of the FO membrane was confirmed. As shown in FIG. 6 to FIG. 8, after the water permeability test of Examples 2, 3 and 4, no clogging occurred in the FO membrane. Although the result of the reference test is omitted in FIG. 9 and FIG. 10, similarly, in Examples 6 and 7, no clogging occurred in the FO membrane after the water permeability test.

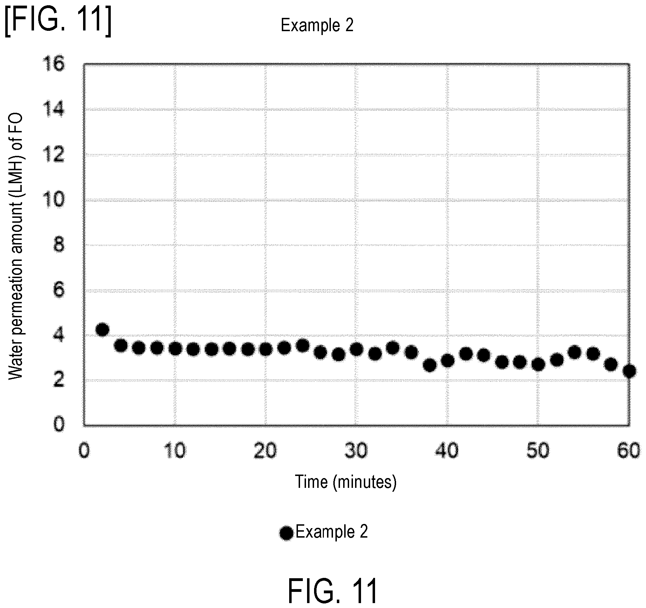

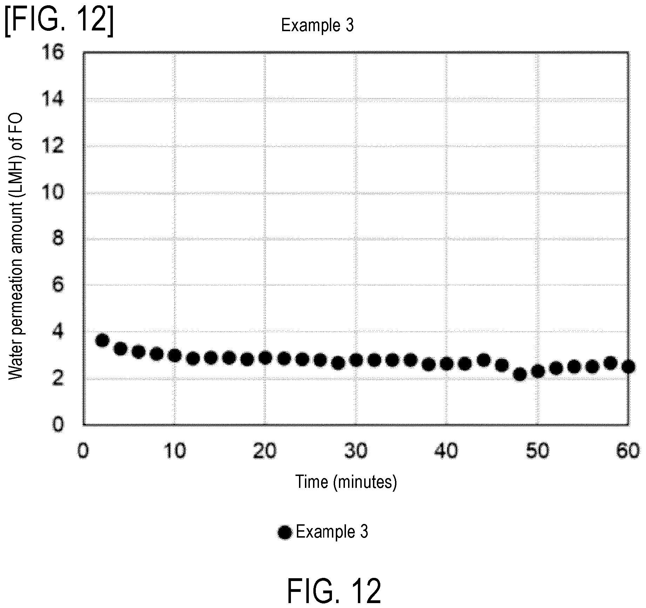

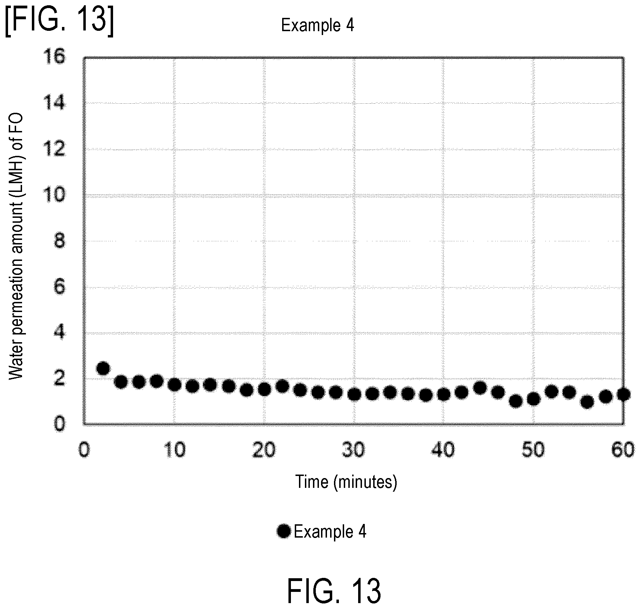

FIG. 11 to FIG. 13 are graphs showing results of a water permeability (permeability) test when the polymers of Examples 2 to 4 were used as DS and 0.15 mol/L of NaCl aqueous solution was used as FS.

As shown in FIG. 6 to FIG. 10, the higher the osmotic pressure of the DS, the higher the flux was exhibited. As shown in Table 4, the higher the osmotic pressure of the DS, the higher the water permeability, and all the DS exhibited sufficiently high water permeability values of 3 LMH or more. Milli-Q water in Table 4 is Milli-Q water.

As shown in FIG. 11 to FIG. 13, it was confirmed that a positive flux was exhibited even when 0.15 mol/L of NaCl aqueous solution was used as FS.

**[Table 4]**

| Table 4 | | Example 2 | Example 3 | Example 4 | Example 6 | Example 7 |
|---|---|---|---|---|---|---|
| Osmotic pressure (MPa) at 50% by weight | | 15.3 | 13.1 | 8.8 | 7.2 | 12.7 |
| Milli-Q Water | Water permeability (LMH) | 6.0 | 5.0 | 4.5 | 3.4 | 6.6 |
| NaCl aqueous solution | | 3.6 | 3.2 | 1.8 | - | - |
| Cloud-point temperature (°C) | | 14.33 | 19.46 | 31.43 | 25.48 | 17.17 |

### Industrial Applicability

The present invention may be used in produced water treatment at an oil field or a shale gas mining site, collection of drinking water, industrial water, or agricultural water from seawater or wastewater, reduction of the volume of wastewater, FO power generation, concentration of beverages, concentration of fruit juice, and concentration of dilute solution containing useful substances.

### Description of Reference Numerals

1: water treatment apparatus
10: FO section (forward osmosis section)
11: FS tank
12: DS tank
13: FO membrane (forward osmosis membrane)
14: dilute DS (dilute draw solution)
20: separation section
21: dilute phase
22: dense phase
30: collection section
31: supply tank
32: collection tank
33: nanofiltration membrane
34: collected dilute phase
40: circulation section
FO: forward osmosis
RO: reverse osmosis
LCST: lower critical solution temperature
UCST: upper critical solution temperature
FS: feed solution
DS: draw solution

## Claims

1. A draw solution used in membrane separation of water using a forward osmosis membrane, the draw solution containing, as a draw solute, a polymeric compound produced using, as a starting material, a compound represented by general formula (a) and a compound represented by general formula (b): 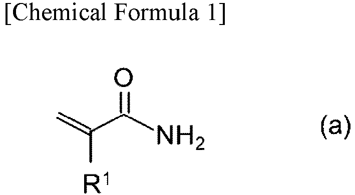 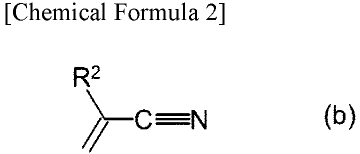 [wherein, in formula (a) and formula (b), R¹ and R² each independently represent a hydrogen atom or a methyl group.]

2. The draw solution according to claim 1, wherein
the compound represented by general formula (a) ranges from 50 to 70 mol%, and the compound represented by general formula (b) ranges from 30 to 50 mol%.

3. The draw solution according to claim 1 or 2, wherein
the polymeric compound has a weight average molecular weight Mw ranging from 2000 to 7000.

4. The draw solution according to claim 1 or 2, wherein
the polymeric compound has a weight average molecular weight Mw ranging from 2500 to 3500.

5. The draw solution according to claim 3, wherein
the polymeric compound has a polydispersity (Mw/Mn) of 1.55 or less.

6. The draw solution according to claim 3, wherein
the polymeric compound has a polydispersity (Mw/Mn) of 1.50 or less.

7. The draw solution according to claim 1, wherein
a 20% by weight aqueous solution of the polymeric compound has an upper critical solution temperature ranging from 20 to 70 °C.

8. The draw solution according to claim 1, wherein
a 20% by weight aqueous solution of the polymeric compound has an upper critical solution temperature ranging from 30 to 60 °C.

9. A water treatment method for performing membrane separation of water using a forward osmosis membrane, the water treatment method comprising:
an osmosis process, in which a feed solution is brought into contact with the draw solution according to claim 1 via a forward osmosis membrane, and water contained in the feed solution is moved to the draw solution side to obtain a dilute draw solution; and
a separation process, in which the dilute draw solution is cooled to an upper critical solution temperature or lower, and is separated into a dilute phase in which a concentration of the polymeric compound is lower than that in the dilute draw solution and a dense phase in which the concentration of the polymeric compound is higher than that in the dilute draw solution.

10. A water treatment apparatus, performing membrane separation of water using a forward osmosis membrane, the water treatment apparatus comprising:
a forward osmosis section, in which a feed solution is brought into contact with the draw solution according to claim 1 via a forward osmosis membrane, and water contained in the feed solution is moved to the draw solution side to obtain a dilute draw solution; and
a separation section, in which the dilute draw solution is cooled to an upper critical solution temperature or lower, and is separated into a dilute phase in which a concentration of the polymeric compound is lower than that in the dilute draw solution and a dense phase in which the concentration of the polymeric compound is higher than that in the dilute draw solution;
a collection section, in which water is extracted from the dilute phase to obtain a collected dilute phase after extraction of water; and
a circulation section, in which the dense phase in the separation section and the collected dilute phase after extraction of water in the collection section are heated, and are circulated to the forward osmosis section.
